# EUROPEAN PATENT SPECIFICATION

(11) **EP 3 023 861 B1**
(45) Date of publication and mention of the grant of the patent: **03.10.2018**
(21) Application number: 15195478.1
(22) Date of filing: 19.11.2015
(51) Int. Cl.: G06F 1/32, G06F 3/0488, G06F 21/36

(54) **AN ELECTRONIC APPARATUS AND A METHOD FOR DISPLAYING A SCREEN OF THE ELECTRONIC APPARATUS**
ELEKTRONISCHE VORRICHTUNG UND VERFAHREN ZUM ANZEIGEN EINES BILDSCHIRMS DER ELEKTRONISCHEN VORRICHTUNG
APPAREIL ÉLECTRONIQUE ET PROCÉDÉ POUR AFFICHER UN ÉCRAN D'APPAREIL ÉLECTRONIQUE

(30) Priority: 21.11.2014 KR 20140163481
(43) Date of publication of application: 25.05.2016
(73) Proprietor: Samsung Electronics Co., Ltd., Gyeonggi-do 16677 (KR)
(72) Inventor: Cha, Jung-Yoon, Suwon-si (KR)
(74) Representative: Nederlandsch Octrooibureau

(56) References cited:
- EP-A1- 2 434 368
- WO-A1-2015/035549
- US-A1- 2013 120 459
- US-A1- 2014 184 628

## Description

### TECHNICAL FIELD

The present disclosure relates to a method of determining a direction of displaying a screen of an electronic device when a screen unlock is performed on the electronic device staying in a sleep (or a screen lock) state.

### BACKGROUND

In order to use an electronic device in a sleep (or a screen lock) state, a screen unlock action is performed, and thereafter, an action of running an application, and the like, is performed. Examples of the screen unlock action include a swipe unlock action, a pattern unlock action, and the like.

However, since a heavy electronic device, such as a large-sized tablet, is often used on a desk, and the like, the electronic device is placed horizontally in a Z-axis direction. Therefore, a width and/or height direction corresponding to an X axis and/or Y axis cannot be detected by a sensor.

Although a screen direction axis of the electronic device must be determined based on a user's gaze direction, a pre-set screen direction axis is maintained in practice without alteration until right before entering a sleep mode state. In this case, inconveniently, a user needs to perform an additional action of standing or rotating the electronic device in a desired direction.

Therefore, a need exists for an electronic device of which a screen display direction can be displayed in a user's desired direction without having to perform an additional action, and a method of displaying a screen of the electronic device.

EP 2 434 368 A1 discloses a device comprising a user interface configured to detect a user gesture for unlocking a sleep state, and a display unit configured to display the screen based on a determined screen display orientation. US 2014/184628 discloses a device where screen orientation is set by a user gesture.

### SUMMARY

The invention is defined by the appended claims. Aspects of the present disclosure are to address at least the above-mentioned problems and/or disadvantages and to provide at least the advantages described below. Accordingly, an aspect of the present disclosure is to provide an electronic device of which a screen display direction can be displayed in a user's desired direction without having to perform an additional action, and a method of displaying a screen of the electronic device.

In accordance with an aspect of the present disclosure, a method of displaying a screen of an electronic device is provided. The method includes detecting a user gesture for unlocking a sleep state, determining a screen display direction based on the detected user gesture, and displaying the screen based on the determined screen display direction.

In accordance with another aspect of the present disclosure, an electronic device is provided. The electronic device includes a user interface configured to detect a user gesture for unlocking a sleep state, a processor configured to determine a screen display direction based on the detected user gesture, and a display unit configured to display the screen based on the determined screen display direction under the control of the processor.

According to an embodiment of the present disclosure, a screen display direction of an electronic device can be displayed in a user's desired direction without having to perform an additional user's action when a screen unlock is achieved in the electronic device. Therefore, there is an advantage in that a user's inconvenience caused by the additional action can be prevented.

Other aspects, advantages, and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 illustrates a connection environment between an electronic device and an external electronic device according to an embodiment of the present disclosure;
FIG. 2 is a block diagram of an electronic device according to an embodiment of the present disclosure;
FIG. 3 is a block diagram of a program module according to an embodiment of the present disclosure;
FIG. 4 is a flowchart illustrating a screen display method of an electronic device according to an embodiment of the present disclosure;
FIG. 5 illustrates a normal swipe action for unlocking a sleep state of an electronic device according to an embodiment of the present disclosure;
FIGS. 6A and 6B illustrate a screen display based on a swipe action according to various embodiments of the present disclosure;
FIG. 7 illustrates a screen display based on a pattern action according to an embodiment of the present disclosure; and
FIG. 8 is a block diagram illustrating an electronic device according to an embodiment of the present disclosure.

Throughout the drawings, like reference numerals will be understood to refer to like parts, components, and structures.

### DETAILED DESCRIPTION

The following description with reference to the accompanying drawings is provided to assist in a comprehensive understanding of various embodiments of the present disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

By the term "substantially" it is meant that the recited characteristic, parameter, or value need not be achieved exactly, but that deviations or variations, including for example, tolerances, measurement error, measurement accuracy limitations and other factors known to those of skill in the art, may occur in amounts that do not preclude the effect the characteristic was intended to provide.

As used herein, the expression "have", "may have", "include", or "may include" refers to the existence of a corresponding feature (e.g., a numeral, a function, an operation, or a constituent element, such as a component), and does not exclude one or more additional features. In embodiments of the present disclosure, the expression "A or B", "at least one of A or/and B", or "one or more of A or/and B" may include all possible combinations of the items listed. For example, the expression "A or B", "at least one of A and B", or "at least one of A or B" refers to all of (1) including at least one A, (2) including at least one B, or (3) including all of at least one A and at least one B.

The expression "a first", "a second", "the first", or "the second" used in various embodiments of the present disclosure may modify various components regardless of the order and/or the importance but does not limit the corresponding components. For example, a first user device and a second user device indicate different user devices although both of them are user devices. For example, a first element may be termed a second element, and similarly, a second element may be termed a first element without departing from the scope of the present disclosure.

It should be understood that when an element (e.g., a first element) is referred to as being (operatively or communicatively) "connected," or "coupled," to another element (e.g., a second element), the element may be directly connected or coupled directly to the other element or any other element (e.g., a third element) may be interposer between them. In contrast, it may be understood that when an element (e.g., the first element) is referred to as being "directly connected," or "directly coupled" to another element (e.g., the second element), there are no elements (e.g., the third element) interposed between them.

The expression "configured to" used in embodiments of the present disclosure may be exchanged with, for example, "suitable for", "having the capacity to", "designed to", "adapted to", "made to", or "capable of' according to the situation. The term "configured to" may not necessarily imply "specifically designed to" in hardware. Alternatively, in some situations, the expression "device configured to" may mean that the device, together with other devices or components, "is able to". For example, the phrase "processor adapted (or configured) to perform A, B, and C" may mean a dedicated processor (e.g., an embedded processor) only for performing the corresponding operations or a generic-purpose processor (e.g., a central processing unit (CPU) or an application processor (AP)) that can perform the corresponding operations by running one or more software programs stored in a memory device.

Unless defined otherwise, all terms used herein, including technical and scientific terms, have the same meaning as those commonly understood by a person skilled in the art to which the present disclosure pertains. Such terms as those defined in a generally used dictionary may be interpreted to have the meanings equal to the contextual meanings in the relevant field of art, and are not to be interpreted to have ideal or excessively formal meanings unless clearly defined in embodiments of the present disclosure. In some cases, even the term defined in embodiments of the present disclosure should not be interpreted to exclude embodiments of the present disclosure.

An electronic device, according to various embodiments of the present disclosure, may include at least one of, for example, a smart phone, a tablet personal computer (PC), a mobile phone, a video phone, an electronic book reader (e-book reader), a desktop PC, a laptop PC, a netbook computer, a workstation, a server, a personal digital assistant (PDA), a portable multimedia player (PMP), a moving picture experts group phase 1 or phase 2 (MPEG-1 or MPEG-2) audio layer-3 (MP3) player, a mobile medical device, a camera, a wearable device, and the like. According to various embodiments of the present disclosure, the wearable device may include at least one of an accessory type (e.g., a watch, a ring, a bracelet, an anklet, a necklace, a glasses, a contact lens, a head-mounted device (HMD), and the like), a fabric or clothing integrated type (e.g., an electronic clothing), a body-mounted type (e.g., a skin pad, or tattoo), a bio-implantable type (e.g., an implantable circuit), and the like.

According to various embodiments of the present disclosure, the electronic device may be a home appliance. The home appliance may include at least one of, for example, a television (TV), a digital versatile Disc (DVD) player, an audio, a refrigerator, an air conditioner, a vacuum cleaner, an oven, a microwave oven, a washing machine, an air cleaner, a set-top box, a home automation control panel, a security control panel, a TV box (e.g., Samsung HomeSync™, Apple TV™, or Google TV™), a game console (e.g., Xbox™ and PlayStation™), an electronic dictionary, an electronic key, a camcorder, an electronic photo frame, and the like.

According to an embodiment of the present disclosure, the electronic device may include at least one of various medical devices (e.g., various portable medical measuring devices (i.e., a blood glucose monitoring device, a heart rate monitoring device, a blood pressure measuring device, a body temperature measuring device, and the like), a magnetic resonance angiography (MRA), a magnetic resonance imaging (MRI), a computed tomography (CT) machine, and an ultrasonic machine), a navigation device, a global positioning system (GPS) receiver, an event data recorder (EDR), a flight data recorder (FDR), a vehicle infotainment devices, an electronic devices for a ship (e.g., a navigation device for a ship, and a gyro-compass), avionics, security devices, an automotive head unit, a robot for home or industry, an automatic teller machine (ATM) in banks, point of sales (POS) in a shop, or internet device of things (e.g., a light bulb, various sensors, electric or gas meter, a sprinkler device, a fire alarm, a thermostat, a streetlamp, a toaster, a sporting goods, a hot water tank, a heater, a boiler, and the like).

According to various embodiments of the present disclosure, the electronic device may include at least one of a part of furniture or a building/structure, an electronic board, an electronic signature receiving device, a projector, and various kinds of measuring instruments (e.g., a water meter, an electric meter, a gas meter, and a radio wave meter). The electronic device according to various embodiments of the present disclosure may be a combination of one or more of the aforementioned various devices. The electronic device according to various embodiments of the present disclosure may be a flexible device. Further, the electronic device according to an embodiment of the present disclosure is not limited to the aforementioned devices, and may include a new electronic device according to the development of technology.

Hereinafter, an electronic device according to various embodiments of the present disclosure will be described with reference to the accompanying drawings. As used herein, the term "user" may indicate a person who uses an electronic device or a device (e.g., an artificial intelligence electronic device) that uses an electronic device.

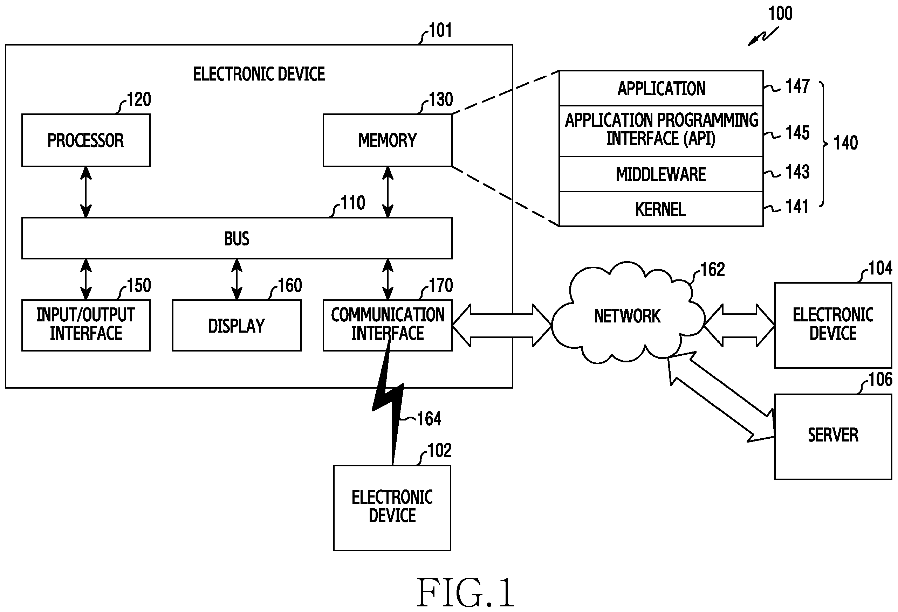

FIG. 1 illustrates a connection environment between an electronic device and an external electronic device according to various embodiments of the present disclosure.

Referring to FIG. 1, an electronic device 101 within a network environment 100 according to various embodiments will be described. The electronic device 101 may include a bus 110, a processor 120, a memory 130, an input/output interface 150, a display 160, and a communication interface 170. In various embodiments of the present disclosure, the electronic device 101 may omit at least one of the above components or may further include other components.

The bus 110 may include, for example, a circuit which interconnects the elements 120 to 170 and delivers a communication (e.g., a control message and/or data) between the components 120 to 170.

The processor 120 may include one or more of a CPU, an AP, and a communication processor (CP). The processor 120, for example, may perform calculation or data processing relating to control and/or communication of at least one other element of the electronic device 101.

The memory 130 may include a volatile memory and/or a non-volatile memory. The memory 130 may store, for example, an instruction or data relevant to at least one other element of the electronic device 101. According to an embodiment of the present disclosure, the memory 130 may store a program (software) 140. The program 140 may include, for example, a kernel 141, middleware 143, an application programming interface (API) 145, and/or an application program (or "application") 147. At least some of the kernel 141, the middleware 143, and the API 145 may be referred to as an operating system (OS).

The kernel 141 may control or manage system resources (e.g., the bus 110, the processor 120, the memory 130, and the like) used for performing an operation or function implemented by the other programs (e.g., the middleware 143, the API 145, or the application program 147). Further, the kernel 141 may provide an interface through which the middleware 143, the API 145, or the application program 147 may access the individual components of the electronic device 101 to control or manage the system resources.

The middleware 143, for example, may function as an intermediary for allowing the API 145 or the application program 147 to communicate with the kernel 141 to exchange data.

In addition, the middleware 143 may process one or more task requests received from the application programs 147 according to priorities thereof. For example, the middleware 143 may assign priorities for using the system resources (e.g., the bus 110, the processor 120, the memory 130, and the like) of the electronic device 101, to at least one of the application programs 147. For example, the middleware 143 may perform scheduling or loading balancing for the one or more task requests by processing the one or more task requests according to the priorities assigned thereto.

The API 145 is an interface through which the application 147 controls a function provided from the kernel 141 or the middleware 143, and may include, for example, at least one interface or function (e.g., an instruction) for file control, window control, image processing, text control, and the like.

The input/output interface 150, for example, may function as an interface that may transfer instructions or data input from a user or another external device to the other element(s) of the electronic device 101. Further, the input/output interface 150 may output the instruction or data received from the other element(s) of the electronic device 101 to a user or another external device.

The display 160 may include, for example, a liquid crystal display (LCD), a light emitting diode (LED) display, an organic LED (OLED) display, a micro electro mechanical system (MEMS) display, or an electronic paper display. The display 160, for example, may display various types of contents (e.g., a text, an image, a video, an icon, or a symbol) for the user. The display 160 may include a touch screen, and may receive, for example, a touch input, a gesture input, a proximity input, or a hovering input provided by an electronic pen or a body part of a user.

The communication interface 170, for example, may configure communication between the electronic device 101 and an external electronic device (e.g., a first external electronic device 102, a second external electronic device 104, or a server 106). For example, the communication interface 170 can be connected to a network 162 through wireless communication or wired communication so as to communicate with the external electronic device (e.g., the first external electronic device 102, the second external electronic device 104, or the server 106).

According to an embodiment of the present disclosure, the electronic device 101 can be connected to the first external electronic device 102 and the second external electronic device 104 without using a separate communication interface. For example, the electronic device 101 can detect whether at least one electronic device among the first external electronic device 102 and the second external electronic device 104 is in contact with at least a part of the electronic device 101 or whether at least one electronic device among the first external electronic device 102 and the second external electronic device 104 is mounted to the electronic device 101 through at least a part of the second external electronic device 104, using at least one sensor among sensors, such as a magnetic sensor, a contact sensor, an optical sensor, and the like, mounted to a part of the electronic device 101.

The wireless communication may use, as a cellular communication protocol, at least one of, for example, long term evolution (LTE), LTE-advanced (LTE-A), code division multiple access (CDMA), wideband CDMA (WCDMA), universal mobile telecommunications system (UMTS), wireless broadband (WiBro), and global system for mobile communications (GSM). In addition, the wireless communication may include, for example, short range communication 164. The short-range communication 164 may include at least one of, for example, Wi-Fi, Bluetooth (BT), near field communication (NFC), and GPS. The wireless communication is not limited to the listed communication schemes and may include all wireless communication schemes. The wired communication may include at least one of, for example, a universal serial bus (USB), a high definition multimedia interface (HDMI), recommended standard 232 (RS-232), and a plain old telephone service (POTS). The network 162 may include at least one of a communication network, such as a computer network (e.g., a local area network (LAN) or a wide area network (WAN)), the Internet, and a telephone network.

The first and second electronic devices may be devices which are identical to or different from the electronic device 101. According to an embodiment of the present disclosure, the first and second external electronic devices may include, for example, a plurality of electronic devices. According to an embodiment of the present disclosure, the server 106 may include a group of one or more servers. According to various embodiments of the present disclosure, all or some of the operations performed in the electronic device 101 may be performed in another electronic device or a plurality of electronic devices (e.g., the first external electronic device 102 and the second external electronic device 104 or the server 106). According to an embodiment of the present disclosure, when the electronic device 101 should perform some functions or services automatically or in response to a request, the electronic device 101 may make a request for performing at least some functions relating thereto to another device (e.g., the first external electronic device 102, the second external electronic device 104, or the server 106) instead of performing the functions or services by itself or additionally. The other electronic device (e.g., the first external electronic device 102, the second external electronic device 104, or the server 106) may perform the requested functions or the additional functions and transfer the result thereof to the electronic device 101. The electronic device 101 may process the received result as it is or additionally to provide the requested functions or services. To achieve this, for example, cloud computing, distributed computing, or client-server computing technology may be used.

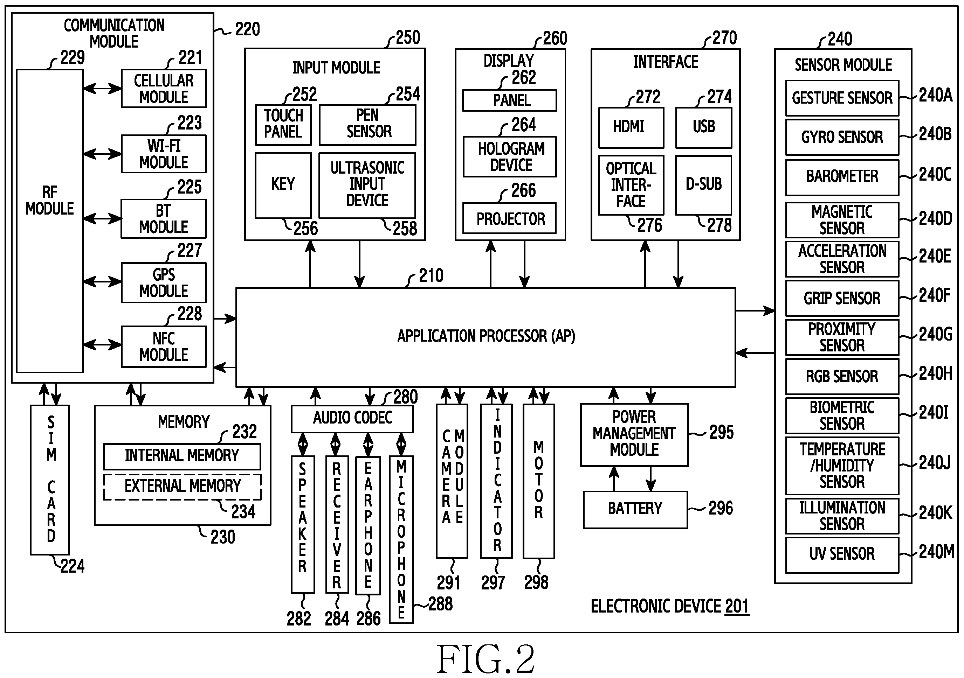

FIG. 2 is a block diagram of an electronic device according to an embodiment of the present disclosure.

Referring to FIG. 2, an electronic device 201, which may include the entirety or a part of the electronic device 101 illustrated in FIG. 1, may include one or more processors (e.g., APs) 210, a communication module 220, a subscriber identification module (SIM) card 224, a memory 230, a sensor module 240, an input device 250, a display 260, an interface 270, an audio module 280, a camera module 291, a power management module 295, a battery 296, an indicator 297, and a motor 298.

The processor 210 can control a plurality of hardware or software components connected to the processor 210 by driving an OS or an application program, and can perform processing of various pieces of data and calculations. The processor 210 may be implemented by, for example, a system on chip (SoC). According to an embodiment of the present disclosure, the processor 210 may further include a graphics processing unit (GPU) and/or an image signal processor. The processor 210 may include at least some (e.g., a cellular module 221) of the components illustrated in FIG. 2. The processor 210 may load, into a volatile memory, an instruction or data received from at least one of the other elements (e.g., a non-volatile memory) to process the loaded instruction or data, and may store various pieces of data in a non-volatile memory.

The communication module 220 may have a configuration equal or similar to that of the communication interface 170 of FIG. 1. The communication module 220 may include, for example, the cellular module 221, a Wi-Fi module 223, a BT module 225, a GPS module 227, an NFC module 228, and a radio frequency (RF) module 229.

The cellular module 221 may, for example, provide a voice call, an image call, a text message service, or an Internet service through a communication network. According to an embodiment of the present disclosure, the cellular module 221 may perform distinguishment between and authentication of electronic devices 201 within a communication network, using a SIM (for example, the SIM card 224). According to an embodiment of the present disclosure, the cellular module 221 may perform at least some of the functions that the processor 210 can provide. According to an embodiment of the present disclosure, the cellular module 221 may include a CP.

Each of the Wi-Fi module 223, the BT module 225, the GPS module 227, and the NFC module 228 may include, for example, a processor for processing data transmitted and received through the corresponding module. According to an embodiment of the present disclosure, at least some (two or more) of the cellular module 221, the Wi-Fi module 223, the BT module 225, the GPS module 227, and the NFC module 228 may be included in one integrated chip (IC) or IC package.

The RF module 229 may, for example, transmit/receive a communication signal (for example, an RF signal). The RF module 229 may include, for example, a transceiver, a power amplifier module (PAM), a frequency filter, a low noise amplifier (LNA), an antenna, and the like. According to an embodiment of the present disclosure, at least one of the cellular module 221, the Wi-Fi module 223, the BT module 225, the GPS module 227, and the NFC module 228 may transmit/receive an RF signal through a separate RF module.

The SIM 224 may include, for example, a card including a subscriber identity module and/or an embedded SIM card, and may include inherent identification information (e.g., an IC card identifier (ICCID)) or subscriber information (e.g., an international mobile subscriber identity (IMSI)).

The memory 230 (for example, the memory 130) may include, for example, an internal memory 232 or an external memory 234. The internal memory 232 may include at least one of, for example, a volatile memory (e.g., a dynamic random access memory (DRAM), a static RAM (SRAM), a synchronous DRAM (SDRAM), and the like) and a non-volatile memory (for example, a one time programmable read only memory (OTPROM), a PROM, an erasable and PROM (EPROM), an electrically erasable and programmable ROM (EEPROM), a mask ROM, a flash memory (for example, a NAND flash memory, a NOR flash memory, and the like), a hard driver, or a solid state drive (SSD).

The external memory 234 may further include a flash drive, for example, a compact flash (CF), a secure digital (SD), a micro-SD, a mini-SD, an extreme digital (xD), a multimedia card (MMC), a memory stick, and the like. The external memory 234 may be functionally and/or physically connected to the electronic device 201 through various interfaces.

The sensor module 240 may, for example, measure a physical quantity or detect an operation state of the electronic device 201, and may convert the measured or detected information into an electric signal. The sensor module 240 may include at least one of, for example, a gesture sensor 240A, a gyro sensor 240B, an atmospheric pressure sensor 240C, a magnetic sensor 240D, an acceleration sensor 240E, a grip sensor 240F, a proximity sensor 240G, a color sensor 240H (e.g., a red/green/blue (RGB) sensor), a bio-sensor 2401, a temperature/humidity sensor 240J, an illumination sensor 240K, and an ultra violet (UV) sensor 240M. Additionally or alternatively, the sensor module 240 may include, for example, an E-nose sensor, an electromyography (EMG) sensor, an electroencephalogram (EEG) sensor, an electrocardiogram (ECG) sensor, an infrared (IR) sensor, an iris sensor, and/or a fingerprint sensor. The sensor module 240 may further include a control circuit for controlling one or more sensors included therein. In various embodiments of the present disclosure, the electronic device 201 may further include a processor configured to control the sensor module 240 as a part of or separately from the processor 210, and may control the sensor module 240 while the processor 210 is in a sleep state.

The input device 250 may include, for example, a touch panel 252, a (digital) pen sensor 254, a key 256, or an ultrasonic input device 258. The touch panel 252 may use at least one of, for example, a capacitive type, a resistive type, an IR type, and an ultrasonic type. Further, the touch panel 252 may further include a control circuit. The touch panel 252 may further include a tactile layer and provide a tactile reaction to a user.

The (digital) pen sensor 254 may include, for example, a recognition sheet which is a part of the touch panel or is separated from the touch panel. The key 256 may include, for example, a physical button, an optical key or a keypad. The ultrasonic input device 258 may detect ultrasonic waves generated by an input tool through a microphone (for example, a microphone 288) to identify data corresponding to the detected ultrasonic waves.

The display 260 (for example, the display 160) may include a panel 262, a hologram device 264 or a projector 266. The panel 262 may include a configuration that is identical or similar to the display 160 illustrated in FIG. 1. The panel 262 may be implemented to be, for example, flexible, transparent, or wearable. The panel 262 and the touch panel 252 may be implemented as one module. The hologram device 264 may show a three dimensional image in the air by using an interference of light. The projector 266 may display an image by projecting light onto a screen. The screen may be located, for example, inside or outside the electronic device 201. According to an embodiment of the present disclosure, the display 260 may further include a control circuit for controlling the panel 262, the hologram device 264, or the projector 266.

The interface 270 may include, for example, an HDMI 272, a USB 274, an optical interface 276, or a D-subminiature (D-sub) 278. The interface 270 may be included in, for example, the communication interface 170 shown in FIG. 1. Additionally or alternatively, the interface 270 may include, for example, a mobile high-definition link (MHL) interface, an SD card/MMC interface, or an infrared data association (IrDA) standard interface.

The audio module 280 may bilaterally convert, for example, a sound and an electrical signal. At least some components of the audio module 280 may be included in, for example, the input/output interface 150 illustrated in FIG. 1. The audio module 280 may process sound information which is input or output through, for example, a speaker 282, a receiver 284, an earphone 286, the microphone 288, and the like.

The camera module 291 is, for example, a device capable of capturing a still image and a moving image. According to an embodiment of the present disclosure, the camera module 291 may include one or more image sensors (e.g., a front sensor or a back sensor), a lens, an image signal processor (ISP), and a flash (e.g., an LED, a xenon lamp, and the like).

The power management module 295 may, for example, manage power of the electronic device 201. According to an embodiment of the present disclosure, the power management module 295 may include a power management IC (PMIC), a charger IC, or a battery or fuel gauge. The PMIC may use a wired and/or wireless charging method. Examples of the wireless charging method may include, for example, a magnetic resonance scheme, a magnetic induction scheme, an electromagnetic wave scheme, and the like. Further, the power management module 295 may further include additional circuits (e.g., a coil loop, a resonance circuit, a rectifier, and the like) for wireless charging. The battery gauge may measure, for example, a residual quantity of the battery 296, and a voltage, a current, or a temperature during the charging. The battery 296 may include, for example, a rechargeable battery and/or a solar battery.

The indicator 297 may display a particular state (e.g., a booting state, a message state, a charging state, and the like) of the electronic device 201 or a part (e.g., the processor 210) of the electronic device 201. The motor 298 can convert an electrical signal into mechanical vibration, and can generate vibration, a haptic effect, and the like. Although not illustrated, the electronic device 201 may include a processing unit (e.g., a GPU) for supporting a mobile TV. The processing unit for supporting mobile TV may, for example, process media data according to a certain standard, such as digital multimedia broadcasting (DMB), digital video broadcasting (DVB), or mediaFLO™.

Each of the above-described component elements of hardware according to an embodiment of the present disclosure may be configured with one or more components, and the names of the corresponding component elements may vary based on the type of electronic device. The electronic device 201, according to various embodiments of the present disclosure, may include at least one of the aforementioned elements. Some elements may be omitted or other additional elements may be further included in the electronic device. In addition, some of the hardware components according to various embodiments may be combined into one entity, which may perform functions identical to those of the relevant components before the combination.

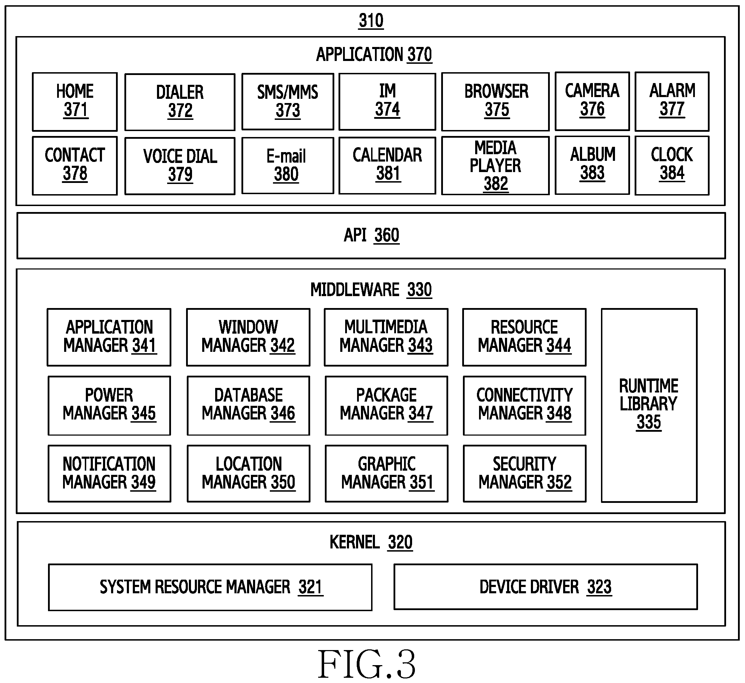

FIG. 3 is a block diagram of a program module according to an embodiment of the present disclosure.

Referring to FIG. 3, according to an embodiment of the present disclosure, a program module 310 (for example, the program 140) may include an OS for controlling resources related to the electronic device (for example, the electronic device 101) and/or various applications (for example, the application program 147) performed in the operating system. The operating system may be, for example, Android, iOS, Windows, Symbian, Tizen, Bada, and the like.

The program module 310 may include a kernel 320, middleware 330, an API 360, and/or an application 370. At least some of the program module 310 may be preloaded on the electronic device, or may be downloaded from an external electronic device (e.g., the first external electronic device 102, the second external electronic device 104, or the server 106).

The kernel 320 (e.g., the kernel 141) may include, for example, a system resource manager 321 and/or a device driver 323. The system resource manager 321 may perform control, allocation, retrieval, and the like, of system resources. According to an embodiment of the present disclosure, the system resource manager 321 may include a process management unit, a memory management unit, a file system management unit, and the like. The device driver 323 may include, for example, a display driver, a camera driver, a BT driver, a shared memory driver, a USB driver, a keypad driver, a Wi-Fi driver, an audio driver, or an inter-process communication (IPC) driver.

For example, the middleware 330 may provide a function commonly required by the application 370, or may provide various functions to the application 370 through the API 360 so as to enable the applications 370 to efficiently use the limited system resources within the electronic device. According to an embodiment of the present disclosure, the middleware 330 (e.g., the middleware 143) may include, for example, at least one of a runtime library 335, an application manager 341, a window manager 342, a multimedia manager 343, a resource manager 344, a power manager 345, a database manager 346, a package manager 347, a connectivity manager 348, a notification manager 349, a location manager 350, a graphic manager 351, and a security manager 352.

The runtime library 335 may include, for example, a library module used by a complier to add a new function through a programming language during the execution of the application 370. The runtime library 335 can perform input/output management, memory management, functionality for an arithmetic function, and the like.

The application manager 341 can, for example, manage a life cycle of at least one application among the applications 370. The window manager 342 can manage graphical user interface (GUI) resources used for the screen. The multimedia manager 343 can identify a format required to reproduce various media files, and can encode or decode a media file by using a coder/decoder (CODEC) appropriate for the corresponding format. The resource manager 344 can manage resources, such as a source code, a memory, a storage space, and the like, of at least one application among the applications 370.

The power manager 345 may operate together with a basic input/output system (BIOS) to manage a battery or power and may provide power information required for the operation of the electronic device. The database manager 346 can generate, search for, or change database to be used by at least one application among the applications 370. The package manager 347 can manage installation or update of an application distributed in a form of a package file.

The connectivity manager 348 can, for example, manage a wireless connection, such as Wi-Fi or BT. The notification manager 349 can display or notify of an event, such as an arrival message, an appointment, a proximity notification, and the like, in such a manner as not to disturb a user. The location manager 350 can manage location information of the electronic device. The graphic manager 351 can manage a graphic effect which is to be provided to a user or a user interface related to the graphic effect. The security manager 352 can provide various security functions required for system security, user authentication, and the like. According to an embodiment of the present disclosure, when the electronic device (e.g., the electronic device 101) includes a telephone call function, the middleware 330 may further include a telephony manager for managing a voice call function or a video call function of the electronic device.

The middleware 330 may include a middleware module which forms a combination of various functions of the above-described components. The middleware 330 can provide a module specialized for each type of OS in order to provide a differentiated function. Further, the middleware 330 may dynamically delete some of the existing components, or may add new components.

The API 360 (e.g., the API 145) is, for example, a set of API programming functions, and may have a different configuration according to an OS. For example, in a case of Android or iOS, one API set may be provided for each platform. Further, in a case of Tizen, two or more API sets may be provided for each platform.

The application 370 (e.g., the application program 147) may include, for example, one or more applications which can provide functions, such as a home function 371, a dialer 372, a short message service (SMS)/multimedia message service (MMS) 373, an instant message (IM) 374, a browser 375, a camera 376, an alarm 377, a contact 378, a voice dialer 379, an email 380, a calendar 381, a media player 382, an album 383, a clock 384, a health care (e.g., measurement of exercise quantity or blood sugar), or provision of environment information (e.g., atmospheric pressure, humidity, or temperature information).

According to an embodiment of the present disclosure, the applications 370 may include an application (hereinafter, referred to as an "information exchange application" for convenience of description) supporting information exchange between the electronic device (e.g., the electronic device 101) and an external electronic device (e.g., the first external electronic device 102 or the second external electronic device 104). The information exchange application may include, for example, a notification relay application for transferring specific information to an external electronic device or a device management application for managing an external electronic device.

For example, the notification relay application may include a function of delivering, to the external electronic device (e.g., the first external electronic device 102 or the second external electronic device 104), notification information generated by other applications (e.g., an SMS/MMS application, an email application, a health care application, an environmental information application, and the like) of the electronic device 101. Further, the notification relay application may, for example, receive notification information from an external electronic device to provide the received notification information to a user.

The device management application may, for example, manage (e.g., install, delete, or update) at least one function of the external electronic device (e.g., the first external electronic device 102 and the second external electronic device 104) communicating with the electronic device (e.g., turning on/off the external electronic device itself (or some elements thereof) or adjusting brightness (or resolution) of a display), applications performed in the external electronic device, or services provided from the external electronic device (e.g., a telephone call service or a message service).

According to an embodiment of the present disclosure, the application 370 may include applications (e.g., a health care application of a mobile medical appliance, and the like) designated according to attributes of the external electronic device (e.g., the first external electronic device 102 or the second external electronic device 104). According to an embodiment of the present disclosure, the application 370 may include an application received from the external electronic devices (e.g., the server 106, or the first external electronic device 102 or the second external electronic device 104). According to an embodiment of the present disclosure, the application 370 may include a preloaded application or a third party application which can be downloaded from the server. Names of the components of the program module 310 according to the above-described embodiments may be changed according to the type of OS.

According to various embodiments of the present disclosure, at least some of the program module 310 may be implemented in software, firmware, hardware, or a combination of two or more thereof. At least some of the program module 310 may be implemented (e.g., performed) by, for example, the processor (e.g., the processor 1410). At least some of the program module 310 may include, for example, a module, a program, a routine, a set of instructions, and/or a process for performing one or more functions.

The term "module" as used herein may, for example, mean a unit including one of hardware, software, and firmware or a combination of two or more of them. The "module" may be interchangeably used with, for example, the term "unit", "logic", "logical block", "component", or "circuit". The "module" may be a minimum unit of an integrated component element or a part thereof. The "module" may be a minimum unit for performing one or more functions or a part thereof. The "module" may be mechanically or electronically implemented. For example, the "module," according to an embodiment of the present disclosure, may include at least one of an application-specific IC (ASIC) chip, a field-programmable gate arrays (FPGA), and a programmable-logic device for performing operations which has been known or are to be developed hereinafter.

According to various embodiments of the present disclosure, at least some of the devices (for example, modules or functions thereof) or the method (for example, operations), according to an embodiment of the present disclosure, may be implemented by a command stored in a computer-readable storage medium in a programming module form. The instruction, when performed by a processor (e.g., the processor 120), may cause the one or more processors to perform the function corresponding to the instruction. The computer-readable storage medium may be, for example, the memory 130.

Certain aspects of the present disclosure can also be embodied as computer readable code on a non-transitory computer readable recording medium. A non-transitory computer readable recording medium is any data storage device that can store data which can be thereafter read by a computer system. Examples of the non-transitory computer readable recording medium include a Read-Only Memory (ROM), a Random-Access Memory (RAM), Compact Disc-ROMs (CD-ROMs), magnetic tapes, floppy disks, and optical data storage devices. The non-transitory computer readable recording medium can also be distributed over network coupled computer systems so that the computer readable code is stored and executed in a distributed fashion. In addition, functional programs, code, and code segments for accomplishing the present disclosure can be easily construed by programmers skilled in the art to which the present disclosure pertains.

At this point it should be noted that the various embodiments of the present disclosure as described above typically involve the processing of input data and the generation of output data to some extent. This input data processing and output data generation may be implemented in hardware or software in combination with hardware. For example, specific electronic components may be employed in a mobile device or similar or related circuitry for implementing the functions associated with the various embodiments of the present disclosure as described above. Alternatively, one or more processors operating in accordance with stored instructions may implement the functions associated with the various embodiments of the present disclosure as described above. If such is the case, it is within the scope of the present disclosure that such instructions may be stored on one or more non-transitory processor readable mediums. Examples of the processor readable mediums include a ROM, a RAM, CD-ROMs, magnetic tapes, floppy disks, and optical data storage devices. The processor readable mediums can also be distributed over network coupled computer systems so that the instructions are stored and executed in a distributed fashion. In addition, functional computer programs, instructions, and instruction segments for accomplishing the present disclosure can be easily construed by programmers skilled in the art to which the present disclosure pertains.

The programming module, according to an embodiment of the present disclosure, may include one or more of the aforementioned components or may further include other additional components, or some of the aforementioned components may be omitted. Operations performed by a module, a programming module, or other component elements according to various embodiments of the present disclosure may be performed sequentially, in parallel, repeatedly, or in a heuristic manner. Further, some operations may be performed according to another order or may be omitted, or other operations may be added. Further, the various embodiments of the present disclosure disclosed in this document are only for the description and understanding of technical contents and do not limit the scope of the present disclosure. Accordingly, the scope of the present disclosure should be construed as including all modifications or various embodiments of the present disclosure based on the technical idea of the present disclosure.

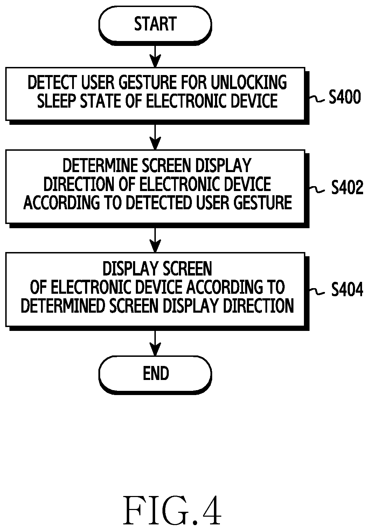

FIG. 4 is a flowchart illustrating a screen display method of an electronic device according to an embodiment of the present disclosure.

Referring to FIG. 4, a user gesture for unlocking a sleep state of the electronic device staying in the sleep state is detected at operation S400. The user gesture may include a swipe action, a pattern action, and the like. More particularly, a start position, direction, and the like, of the swipe action or the pattern action may be detected. In various embodiments of the present disclosure, the swipe action may be an action based on a touch input or may be a user's motion action without the touch input.

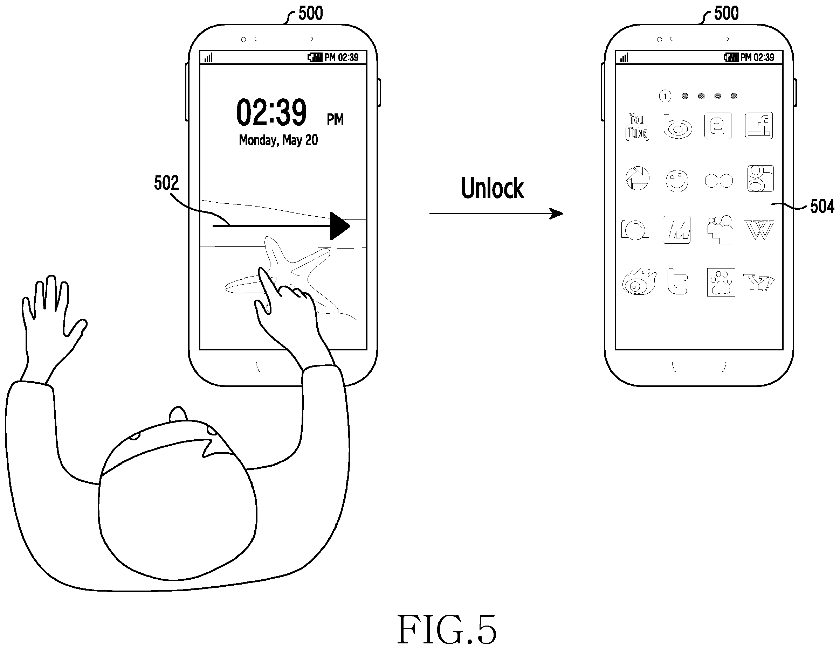

FIG. 5 illustrates a normal swipe action for unlocking a sleep state of an electronic device according to an embodiment of the present disclosure. The swipe action corresponds to an action of swiping a user's body part (e.g., a finger) in a specific direction of a touch screen.

Referring to FIG. 5, when a swipe action is performed in a first direction with respect to an electronic device (e.g., a tablet PC) staying in a sleep state in order to unlock the sleep state, a screen is changed to an active state capable of running an application, and the like.

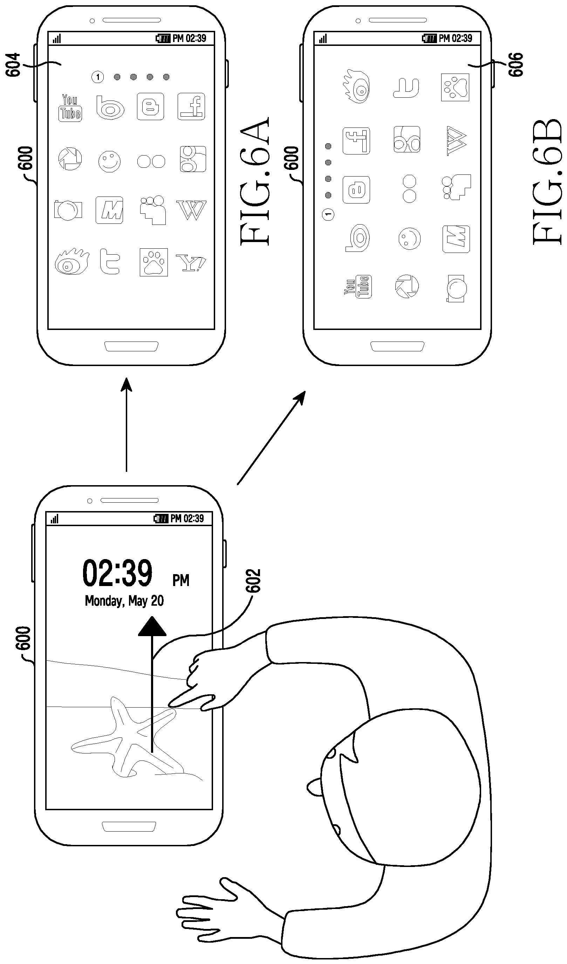

FIGS. 6A and 6B illustrate a screen display based on a swipe action according to various embodiments of the present disclosure.

Referring to FIG. 5, FIG. 6A, or FIG. 6B, when a user performs the swipe action on a screen of an electronic device, a start position, direction, and the like, of the user's swipe action can be recognized through a detection sensor.

A pattern action of the user gesture is an action by which the user inputs a specific pattern on the screen of the electronic device, and is used for a screen unlock.

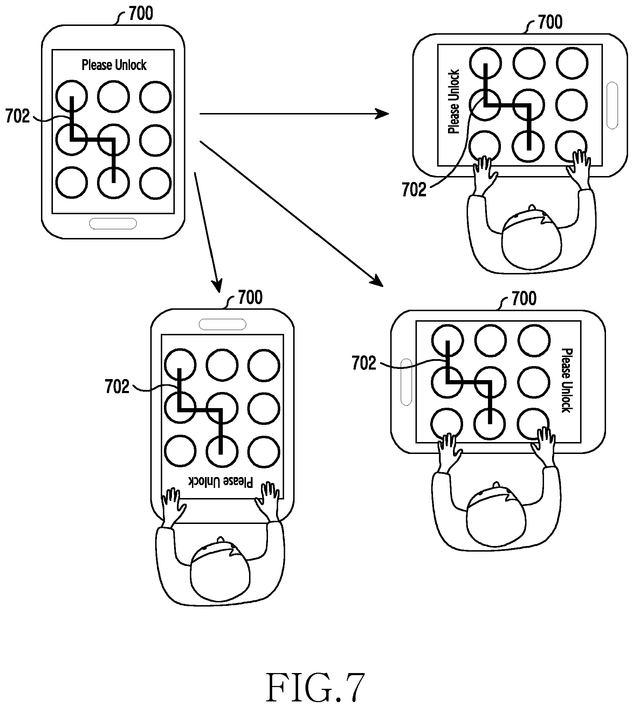

FIG. 7 illustrates a screen display based on a pattern action according to an embodiment of the present disclosure.

Referring to FIG. 7, when a screen is unlocked through an action of connecting points consisting of N x N (e.g., 3 x 3) in a specific pattern, according to the related art, only a security pattern which is input based on a second direction of an electronic device (e.g., a tablet PC) is recognized as a valid security pattern, whereas, according to an embodiment of the present disclosure, an electronic device 700 may recognize an input security pattern action as a valid security pattern 702 irrespective of a first direction, the second direction, and the like. For example, the electronic device may recognize specific input patterns as the same input pattern irrespective of when the specific pattern 702 is input based on the first direction, or when the specific pattern 702 is input based on an upside-down direction with respect to the first direction, or when the specific pattern 702 is input based on a left-right reversed direction with respect to the second direction. In this case, complexity of the security pattern may be decreased to 1/4.

Referring back to FIG. 4, after operation S400, based on the recognized user gesture, the screen display direction of the electronic device is determined at operation S402. For example, the screen display direction is determined to a first display direction when it is recognized that the user gesture moves in the first direction with respect to the electronic device. For example, as shown in FIG. 5, if it is recognized that a user's swipe action is achieved in a first direction 502 with respect to an electronic device 500, the display direction of the electronic device is determined to a first display direction 504 based on the recognition result. In addition, as shown in FIGS. 6A and 6B, if it is recognized that a user's swipe action is achieved in a second direction 602 with respect to an electronic device 600, the display direction of the electronic device is determined to a second display direction 606 based on the recognition result (FIG. 6B).

Meanwhile, as shown in FIG. 7, if the electronic device 700 recognizes an input security pattern action as the valid security pattern 702 irrespective of the first direction, the second direction, and the like, the display direction of the electronic device 700 is determined based on a start position and direction of the recognized security pattern.

After operation S402, based on the determined screen display direction, the screen of the electronic device is displayed at operation S404.

Referring to FIG. 6A, a screen display state based on the swipe action of the related art is shown, and a screen is displayed in a screen direction which is pre-set or which is used immediately before transitioning to a previous sleep mode state, irrespective of the user's swipe action (see 604). On the other hand, referring to FIG. 6B, according to an embodiment of the present disclosure, a screen is displayed in a screen state of the second display direction 606 irrespective of a screen direction which is pre-set when the user's swipe action 602 is recognized or which is used immediately before transitioning to a previous sleep mode state. Therefore, if the screen display direction is determined based on a left-to-right direction of the swipe action in a state where the electronic device is placed on the floor, the user does not have to additionally perform an action for changing a screen. For example, if the first display direction is desired for the screen of the electronic device, the swipe action is performed in the same direction as the direction 502 of FIG. 5, and a screen of the first display direction 504 is displayed by recognizing the swipe action. In addition, if the second display direction is desired for the screen of the electronic device, the swipe action is performed in the same direction as the direction 602 of FIGS. 6A and 6B, and a screen of the second display direction 606 is displayed by recognizing the swipe action (FIG. 6B). Meanwhile, if a result in which even the second display direction is an upside-down direction is desired, the screen display direction may be displayed based on whether a start point is located in a left side or a right side.

In addition, as shown in FIG. 7, if an input security pattern action is recognized as a valid security pattern irrespective of a direction of the electronic device and if the display screen direction is determined based on a start position and direction of the recognized security pattern, the screen can be displayed based on the determined screen display direction.

Meanwhile, according to an embodiment of the present disclosure, even if a screen rotation function is off, a desired screen display direction can be determined compulsorily by performing a user gesture. Therefore, a cumbersome case in which a screen direction is unintentionally changed can be prevented when a user lying on his/her side watches a screen.

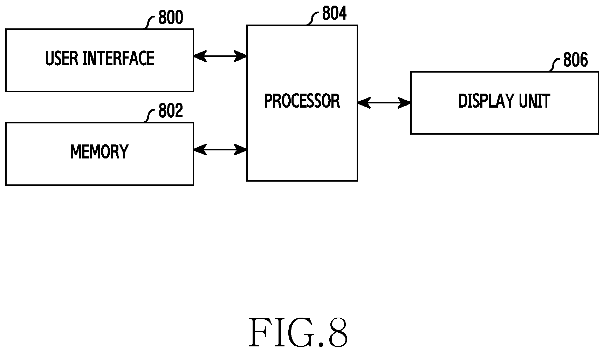

FIG. 8 is a block diagram illustrating an electronic device according to an embodiment of the present disclosure.

Referring to FIG. 8, the electronic device includes a user interface 800, a memory 802, a processor 804, and a display unit 806.

The user interface 800 recognizes a user gesture for unlocking a sleep state of the electronic device staying in the sleep state. To recognize the user gesture, the user interface 800 may include a screen touch detection sensor.

The user interface 800 recognizes at least one of a swipe action and a pattern action as the user gesture. The user interface 800 recognizes at least one of a start position and direction of the swipe action and the pattern action. In addition, the user interface 800 recognizes an action regarding a security pattern as the pattern action. The user interface 800 recognizes a start position of the action regarding the security pattern as a valid start position for a security unlock irrespective of a spatial direction of the electronic device.

As shown in FIG. 5, FIG. 6A, or FIG. 6B, if a swipe action is performed in a first direction with respect to an electronic device to unlock a sleep state of the electronic device (e.g., a tablet PC) staying in a sleep state, the user interface 800 may recognize a start position, direction, and the like, of such a user action through a screen touch detection sensor. In addition, as shown in FIG. 7, the user interface 800 may recognize an input security pattern action as a valid security pattern irrespective of the first direction, second direction, and the like, of the electronic device.

The memory 802 stores information for determining the screen display direction of the electronic device based on the recognized user gesture. The information stored in the memory 802 includes recognition information for recognizing the user gesture direction, security pattern information for determining whether the security pattern action is valid, information for determining the display direction, and the like.

The processor 804 determines the screen display direction of the electronic device based on the recognized user gesture. The processor 804 may determine the screen display direction to the first display direction when it is recognized that the user gesture moves in the first direction of the electronic device, and may determine the screen display direction as the second display direction when it is recognized that the user gesture moves in the second direction.

As shown in FIG. 5, if it is recognized that the user's swipe action is achieved in the first direction 502 with respect to the electronic device 500, the processor 804 determines the display direction of the electronic device to the first display direction based on such a recognition result. In addition, as shown in FIGS. 6A and 6B, if it is recognized that the user's swipe action is achieved in the second direction 602 with respect to the electronic device 600, the processor 804 determines the display direction of the electronic device to the second display direction based on such a recognition result.

Meanwhile, as shown in FIG. 7, if the electronic device 700 recognizes the input security pattern action as the valid security pattern 702 irrespective of the first direction, second direction, and the like, the processor 804 determines the display direction of the electronic device 700 based on a start position and direction of the recognized security pattern.

The display unit 806 displays a screen corresponding to the determined screen display direction under the control of the processor 804. As shown in FIGS. 6A and 6B, the display unit 806 displays a screen in a screen state of a second display direction irrespective of a screen direction which is pre-set when a user's swipe action 602 is recognized or which is used immediately before transitioning to a previous sleep mode state. In addition, as shown in FIG. 7, if an input security pattern action is recognized as the valid security pattern 702 irrespective of a direction of the electronic device 700 and if the display screen direction is determined based on a start position and direction of the recognized security pattern, the display unit 806 displays the screen based on the determined screen display direction.

The aforementioned electronic device includes at least one of a smart phone, a tablet PC, a mobile phone, a video phone, an e-book reader, a netbook computer, a PDA, a PMP, an MP3 player, a mobile medical device, a camera, and a wearable device (e.g., electronic clothes, an electronic bracelet, an electronic necklace, an electronic appcessory, an electronic tattoo, a smart watch, and the like).

Methods based on various embodiments of the present disclosure disclosed in the claims and/or specification based on various embodiments of the present disclosure can be implemented in hardware, software, or a combination of both. When implemented in software, computer readable recording medium for storing one or more programs (i.e., software modules) can be provided. The one or more programs stored in the computer readable recording medium are configured to be performed by one or more processors in an electronic device. The one or more programs include instructions for allowing the electronic device to perform the methods based on various embodiments of the present disclosure disclosed in the claims and/or specification of the present disclosure.

The program (i.e., the software module or software) can be stored in a random access memory, a non-volatile memory including a flash memory, a ROM, an EEPROM, a magnetic disc storage device, a CD-ROM, DVDs or other forms of optical storage devices, and a magnetic cassette. Alternatively, the program can be stored in a memory configured in combination of all or some of these storage media. In addition, the configured memory may be plural in number.

Further, the program can be stored in an attachable storage device capable of accessing the electronic device through a communication network, such as the Internet, an Intranet, a LAN, a wide LAN (WLAN), or a storage area network (SAN) or a communication network configured by combining the networks. The storage device can access the electronic device via an external port. In addition, an additional storage unit on a communication network can access a portable electronic device.

While the present disclosure has been shown and described with reference to various embodiments thereof, it will be understood by those skilled in the art that various changes in form and details may be made therein without departing from the scope of the present disclosure as defined by the appended claims.

## Claims

1. A method of displaying a screen of an electronic device, the method comprising:
detecting (400) a user gesture for unlocking a sleep state of the electronic device;
determining (402) a screen display direction based on the detected user gesture during the sleep state; and
displaying (404) the screen based on the determined screen display direction.

2. The method of claim 1, wherein the user gesture comprises at least one of a swipe action or a pattern action.

3. The method of claim 2, wherein the detecting (400) of the user gesture comprises recognizing at least one of a start position and direction of the swipe action or the pattern action.

4. The method of claim 2, wherein the pattern action comprises an action regarding a security pattern.

5. The method of claim 4, wherein a start position of the action regarding the security pattern is detected as a valid start position for a security unlock.

6. The method of claim 1, wherein the determining (402) of the screen display direction comprises:
determining a first display direction as the screen display direction when the user gesture in a first direction is detected, and
determining a second display direction as the screen display direction when the user gesture in a second direction is detected.

7. An electronic device comprising:
a user interface (800) configured to detect a user gesture for unlocking a sleep state of the electronic device;
a processor (804) configured to determine a screen display direction based on the detected user gesture during the sleep state; and
a display unit (806) configured to display the screen based on the determined screen display direction under the control of the processor.

8. The electronic device of claim 7, wherein the user interface (800) is further configured to detect at least one of a swipe action or a pattern action as the user gesture.

9. The electronic device of claim 8, wherein the user interface (800) is further configured to detect at least one of a start position and direction of the swipe action and the pattern action.

10. The electronic device of claim 8, wherein the user interface (800) is further configured to recognize an action regarding a security pattern as the pattern action.

11. The electronic device of claim 10, wherein the user interface (800) is further configured to detect a start position of the action regarding the security pattern as a valid start position for a security unlock.

12. The electronic device of claim 7, wherein the processor (804) is further configured to:
determine a first display direction as the screen display direction when the user gesture in a first direction is detected, and
determine a second display direction as the screen display direction when the user gesture in a second direction is detected.

13. The electronic device of claim 7, further comprising a memory (802) configured to store information for determining a screen display direction of the electronic device based on the detected user gesture.

14. The electronic device of claim 7, wherein the electronic device comprises at least one of a smart phone, a tablet personal computer ,PC, a mobile phone, a video phone, an e-book reader, a netbook computer, a personal digital assistant ,PDA, a portable multimedia player ,PMP, a moving picture experts group phase 1 or phase 2 ,MPEG-1 or MPEG-2, audio layer 3 ,MP3, player, a mobile medical device, a camera, or a wearable device.

15. The electronic device of claim 14, wherein the wearable device comprises at least one of electronic clothes, an electronic bracelet, an electronic necklace, an electronic appcessory, an electronic tattoo, or a smart watch.

## Patentansprüche

1. Verfahren zum Anzeigen eines Bildschirms einer elektronischen Vorrichtung, wobei das Verfahren Folgendes umfasst:
Detektieren (400) einer Benutzergeste zum Entsperren eines Ruhezustands der elektronischen Vorrichtung;
Bestimmen (402) einer Bildschirmanzeigerichtung basierend auf der erkannten Benutzergeste während des Ruhezustandes; und
Anzeigen (404) des Bildschirms basierend auf der bestimmten Bildschirmanzeigerichtung.

2. Verfahren nach Anspruch 1, wobei die Benutzergeste mindestens eine Wischaktion oder eine Musteraktion umfasst.

3. Verfahren nach Anspruch 2, wobei das Erkennen (400) der Benutzergeste das Erkennen mindestens einer Startposition und -richtung der Wischaktion oder der Musteraktion umfasst.

4. Verfahren nach Anspruch 2, wobei die Musteraktion eine Aktion bezüglich eines Sicherheitsmusters umfasst.

5. Verfahren nach Anspruch 4, wobei eine Startposition der Aktion bezüglich des Sicherheitsmusters als eine gültige Startposition für eine Sicherheitsentsperrung erkannt wird.

6. Verfahren nach Anspruch 1, wobei das Bestimmen (402) der Bildschirmanzeigerichtung Folgendes umfasst:
Bestimmen einer ersten Anzeigerichtung als Bildschirmanzeigerichtung, wenn die Benutzergeste in einer ersten Richtung erkannt wird, und
Bestimmen einer zweiten Anzeigerichtung als die Bildschirmdarstellungsrichtung, wenn die Benutzergeste in einer zweiten Richtung erkannt wird.

7. Elektronische Vorrichtung, umfassend:
eine Benutzerschnittstelle (800), die konfiguriert ist, eine Benutzergeste zum Entsperren eines Ruhezustands der elektronischen Vorrichtung zu erkennen;
einen Prozessor (804), der konfiguriert ist, eine Bildschirmanzeigerichtung basierend auf der erkannten Benutzergeste während des Ruhezustandes zu bestimmen; und
eine Anzeigeeinheit (806), die konfiguriert ist, den Bildschirm basierend auf der bestimmten Bildschirmanzeigerichtung unter der Steuerung des Prozessors anzuzeigen.

8. Elektronische Vorrichtung nach Anspruch 7, wobei die Benutzerschnittstelle (800) ferner konfiguriert ist, mindestens eine von einer Wischaktion oder einer Musteraktion als die Benutzergeste zu erkennen.

9. Elektronische Vorrichtung nach Anspruch 8, wobei die Benutzerschnittstelle (800) ferner konfiguriert ist, mindestens eine einer Startposition und -richtung der Wischaktion oder der Musteraktion zu erkennen.

10. Elektronische Vorrichtung nach Anspruch 8, wobei die Benutzerschnittstelle (800) ferner konfiguriert ist, eine Aktion bezüglich eines Sicherheitsmusters als die Musteraktion zu erkennen.

11. Verfahren nach Anspruch 10, wobei die Benutzerschnittstelle (800) ferner konfiguriert ist, eine Startposition der Aktion bezüglich des Sicherheitsmusters als eine gültige Startposition für eine Sicherheitsentsperrung zu erkennen.

12. Elektronische Vorrichtung nach Anspruch 7, wobei der Prozessor (804) ferner zu Folgendem konfiguriert ist:
Bestimmen einer ersten Anzeigerichtung als Bildschirmanzeigerichtung, wenn die Benutzergeste in einer ersten Richtung erkannt wird, und
Bestimmen einer zweiten Anzeigerichtung als die Bildschirmdarstellungsrichtung, wenn die Benutzergeste in einer zweiten Richtung erkannt wird.

13. Elektronische Vorrichtung nach Anspruch 7, ferner umfassend einen Speicher (802), der konfiguriert ist, Informationen zum Bestimmen einer Bildschirmanzeigerichtung der elektronischen Vorrichtung basierend auf der erkannten Benutzergeste zu speichern.

14. Elektronische Vorrichtung nach Anspruch 7, wobei die elektronische Vorrichtung mindestens eines von einem Smartphone, einem Tablet-PC, einem PC, einem Mobiltelefon, einem Videotelefon, einem E-Book-Reader, einem Netbook-Computer, einem persönlichen digitalen Assistenten, PDA, einem tragbaren Multimedia-Player, PMP, einer Bewegtbild-Expertengruppe, Phase 1 oder Phase 2, MPEG-1 oder MPEG-2, Audiolayer 3, MP3, Player, einer mobilen medizinischen Vorrichtung, einer Kamera oder einer tragbaren Vorrichtung umfasst.

15. Elektronische Vorrichtung nach Anspruch 14, wobei die tragbare Vorrichtung mindestens eines von elektronischen Kleidungsstücken, einem elektronischen Armband, einer elektronischen Halskette, einem elektronischen Appcessory, einer elektronischen Tätowierung oder einer Smartwatch umfasst.

## Revendications

1. Procédé d'affichage d'un écran d'un dispositif électronique, le procédé comprenant de :
détecter (400) un geste d'utilisateur pour déverrouiller un état de veille du dispositif électronique ;
déterminer (402) une direction d'affichage d'écran sur la base du geste d'utilisateur détecté pendant l'État de veille ; et
afficher (404) l'écran sur la base de la direction d'affichage d'écran déterminée.

2. Procédé selon la revendication 1, dans lequel le geste d'utilisateur comprend au moins une action de glissement ou une action de modèle.

3. Procédé selon la revendication 2, dans lequel la détection (400) du geste d'utilisateur comprend de reconnaître au moins une d'une position de départ et une direction de l'action de balayage ou l'action de modèle.

4. Procédé selon la revendication 2, dans lequel l'action de modèle comprend une action concernant un modèle de sécurité.

5. Procédé selon la revendication 4, dans lequel une position de départ de l'action concernant le modèle de sécurité est détectée comme une position de départ valide pour un déverrouillage de sécurité.

6. Procédé selon la revendication 1, dans lequel la détermination (402) de la direction d'affichage d'écran comprend de :
déterminer une première direction d'affichage comme la direction d'affichage d'écran lorsque le geste d'utilisateur dans une première direction est détecté et
déterminer une seconde direction d'affichage comme la direction d'affichage d'écran lorsque le geste d'utilisateur dans une seconde direction est détecté.

7. Dispositif électronique comprenant :
une interface d'utilisateur (800) configurée pour détecter un geste d'utilisateur pour déverrouiller un état de veille du dispositif électronique ;
un processeur (804) configuré pour déterminer une direction d'affichage d'écran sur la base du geste d'utilisateur détecté pendant l'état de veille ; et
une unité d'affichage (806) configurée pour afficher l'écran sur la base de la direction d'affichage d'écran déterminé sous la commande du processeur.

8. Dispositif électronique selon la revendication 7, dans lequel l'interface utilisateur (800) est en outre configurée pour détecter au moins une action de glissement ou une action de modèle comme le geste d'utilisateur.

9. Dispositif électronique selon la revendication 8, dans lequel l'interface d'utilisateur (800) est en outre configurée pour détecter au moins une d'une position de départ et une direction de l'action de glissement et l'action de modèle.

10. Dispositif électronique selon la revendication 8, dans lequel l'interface d'utilisateur (800) est en outre configurée pour reconnaître une action concernant un modèle de sécurité comme l'action de modèle.

11. Dispositif électronique selon la revendication 10, dans lequel l'interface d'utilisateur (800) est en outre configurée pour détecter une position de départ de l'action concernant le modèle de sécurité comme une position de départ valide pour un déverrouillage de sécurité.

12. Dispositif électronique selon la revendication 7, dans lequel le processeur (804) est en outre configuré pour :
déterminer une première direction d'affichage comme la direction d'affichage d'écran lorsque le geste d'utilisateur dans une première direction est détecté et
déterminer une seconde direction d'affichage comme la direction d'affichage d'écran lorsque le geste d'utilisateur dans une seconde direction est détecté.

13. Dispositif électronique selon la revendication 7, comprenant en outre une mémoire (802) configurée pour mémoriser une information pour déterminer une direction d'affichage d'écran du dispositif électronique sur la base du geste d'utilisateur détecté.

14. Dispositif électronique selon la revendication 7, dans lequel le dispositif électronique comprend au moins un d'un téléphone intelligent, une tablette PC personnelle, un téléphone mobile, un téléphone vidéo, une liseuse de livres électroniques, un ordinateur netbook, un assistant numérique personnel PDA, un lecteur multimédia portable PMP Moving Picture Experts Group en phase 1 ou 2, MPEG-1 ou MPEG-2, un lecteur MP3, un dispositif médical mobile, une caméra ou un dispositif portable.

15. Dispositif électronique selon la revendication 14, dans lequel le dispositif portable comprend au moins un de vêtements électroniques, un bracelet électronique, un collier électronique, un accessoire électronique connecté, un tatouage électronique ou une montre intelligente.
